# EUROPEAN PATENT SPECIFICATION

(11) **EP 4 529 077 B1**
(45) Date of publication and mention of the grant of the patent: **26.08.2026**
(21) Application number: 23382965.4
(22) Date of filing: 22.09.2023
(51) Int. Cl.: H04L 9/00, H04L 9/32, H04L 9/08

(54) **A COMPUTER-IMPLEMENTED METHOD AND A COMPUTING SYSTEM FOR PERFORMING THE METHOD**
COMPUTERIMPLEMENTIERTES VERFAHREN UND COMPUTERSYSTEM ZUR DURCHFÜHRUNG DES VERFAHRENS
PROCÉDÉ MIS EN UVRE PAR ORDINATEUR ET SYSTÈME INFORMATIQUE POUR RÉALISER LE PROCÉDÉ

(43) Date of publication of application: 26.03.2025
(73) Proprietor: Fundación Tecnalia Research & Innovation, 20009 Donastia-San Sebastían Gipuzkoa (ES)
(72) Inventor: REGUEIRO SENDEROS, Cristina, 48160 Derio - Bizkaia (ES); SECO AGUIRRE, Iñaki, 48160 Derio - Bizkaia (ES); BERNABÉ RODRÍGUEZ, Julen, 48160 Derio - Bizkaia (ES); URQUIZU GOMEZ, Borja, 48160 Derio - Bizkaia (ES)
(74) Representative: Balder IP Law, S.L.

(56) References cited:
- WO-A1-2015/198098
- US-A1- 2021 248 176

## Description

### TECHNICAL FIELD

The present invention is encompassed within the field computer-implemented methods and computing devices. More particularly, within the field of encryption and decryption.

### BACKGROUND

Methods for checking whether a non-encrypted value is within a non-encrypted value of an attribute, wherein the attribute is initially encrypted, are known in the art. Most of these methods rely on decrypting the complete encrypted value of the attribute and then checking whether the non-encrypted value is within the decrypted complete value of the attribute. Therefore, these methods require revealing (i.e., decrypting) content of the attribute in addition to the value which presence is being checked. Revealing this additional information may be prejudicial because it may be desirable that the additional information is not decrypted by certain devices (e.g., unsecure devices) and/or revealed to certain subjects.

A solution to prevent the additional data from being decrypted by particular computing devices is not sending the additional data to said devices. However, this solution may require generating new data (e.g., new credentials) which does not comprise the additional data nor an encrypted value of the additional data. Thereby, this solution requires additional time and processing resources to generate the new data and additional storage capacity to store the new data.

Nowadays, there are solutions based on self-sovereign identity to characterize data and to check whether certain numeric features within said data are met without requiring to the decrypt the data (e.g., by using Zero Knowledge Proofs). There are also some solutions restricted to a limited list of predetermined non-numeric values (e.g., by using Zero Knowledge Set Memebership).

However, there is a need for a solution which is not limited to just a few data (e.g., only to numeric data or only to predetermined non-numeric values), for example, by enabling that it be checked whether a non-predetermined string is within a decrypted value of encrypted data.

US 2021/248176 A1 discloses secure matching and identification of patterns. WO 2015/198098 A1 discloses a privacy-preserving querying mechanism on privately encrypted data on semi-trusted cloud.

### SUMMARY

The objects of the present invention are achieved by means of the appended set of claims.

A first aspect of the disclosure relates to a computer-implemented method, the method comprising:
- determining a first value;
- receiving, by a first computing device, first data, the first data comprising an encrypted value of second data, wherein the encrypted value has resulted from homomorphically encrypting (e.g., by performing fully homomorphic encryption), by a computing device other than the first computing device, with a public key and a context of homomorphic encryption the second data;
- receiving, by the first computing device, the public key and the context of homomorphic encryption;
- homomorphically encrypting (e.g., by performing fully homomorphic encryption), by the first computing device, the first value by using the received public key and the received context of homomorphic encryption thereby obtaining an encrypted first value;
- searching, by the first computing device and within the received first data, the encrypted first value thereby obtaining an encrypted result of the search;
- sending, by the first computing device and to a second computing device, the encrypted result of the search found in the step of searching;
- receiving, by the first computing device, a second private key;
- partially decrypting, by the first computing device, the encrypted result of the search by using the second private key and the context thereby obtaining a first partially decrypted result;
- receiving, by the second computing device, the first partially decrypted result;
- partially decrypting, by the second computing device, the received encrypted result of the search by using a first private key and the context thereby obtaining a second partially decrypted result;
- determining, by the second computing device, based on the first partially decrypted result and the second partially decrypted result whether a decryption resulting from combining the first partially decrypted result and the second partially result results in a value indicative of any one of true and false;
- upon determining that the decryption resulting from combining the first partially decrypted result and the second partially decrypted result results in a value indicative of any one of true and false, sending, by the second computing device, the second partially decrypted result to the first computing device;
- decrypting, by the first computing device, the encrypted result of the search by using the first partially decrypted result and the second partially decrypted result, wherein the result of the decryption is a value indicative of true if the first value is within the second data, and the result of the decryption is a value indicative of false if the first value is not within the second data.

By sending the second partially decrypted result to the first computing device instead of sending the first private key to the first computing device, it is ensured that the first computing device may decrypt the encrypted result of the search without requiring to decrypt the second data. Thereby, the first computing device uses threshold cryptography to decrypt the encrypted result of the search.

In some embodiments, the step of decrypting, by the first computing device, the encrypted result of the search by using the first partially decrypted result and the second partially decrypted result does not comprise decrypting the encrypted value of second data. Thereby, the first computing device does not decrypt the encrypted value of the second data in any step of the first aspect of the disclosure.

In some embodiments, the homomorphic encryption context, the public key, the first private key and the second private key are generated by the second computing device and/or provided by a subject. Since the second computing device generates the first private key and the second private key, the first private key and the second private key are accessible only if the configuration of the second computing device allows such access. Thereby, decryption by using the first private key and the second private key is restricted.

In some embodiments, the first data comprises an identification credential for identifying the subject and/or the second computing device. Thereby, the same data (i.e., the first data) both identifies the subject and/or the second computing device and comprises the encrypted value of the second data. For example, the first data is a presentation comprising the identification credential. The subject may be associated with the second computing device.

In some embodiments, the identification credential has a format suitable for use of the credential in self-sovereign identity.

In some embodiments, the first data comprises the encrypted value of the second data and additional data. The additional data may or may not be encrypted, more particularly with homomorphic encryption, even more particularly with fully homomorphic encryption. For example, the first data may be a presentation comprising an identification credential. The identification credential may comprise one or more attributes, wherein the value of each attribute of the one or more attributes forms part of the encrypted value of the second data and the property of each attribute of the one or more attributes is not encrypted.

In some embodiments, the second data comprises the first value and additional data. Thereby, the first computing device checks whether a first value is within the second data without requiring decrypting the additional data of the second data.

In some embodiments, the encrypted value of the second data is a complete value of an attribute of the identification credential. Thereby, the first computing device determines whether the first value is within a complete non-encrypted value of the attribute of the identification credential.

In some embodiments, the identification credential comprises credential metadata, one or more claims and a digital proof of the identification credential; wherein each claim of the one or more claims is an assertion about the subject and/or about the second computing device; each claim of the one or more claims comprises one or more attributes, and each attribute of the one or more attributes comprises a property and a value; wherein the digital proof preferably comprises a value of a digital signature. The first computing device is configured to verify the digital proof.

The credential metadata comprises, for example, at least one of: data indicative of a type of the credential, data indicative of a date of issuance of the credential, data indicative of an issuer of the credential and data indicative of an identification of the credential.

In some embodiments, the first data is a presentation comprising presentation metadata, the identification credential and a digital proof of the presentation; wherein the digital proof of the presentation preferably comprises a value of a digital signature.

The presentation metadata comprises, for example, at least one of: data indicative of a type of the presentation, data indicative of an identification of the presentation and data indicative of terms of use of the presentation (e.g., instructions to be executed by a computing device which receives the presentation).

In the step of searching, several operations are performed on the first data and on the encrypted first value thereby obtaining an encrypted result of the search. A decryption of the encrypted result of the search results in a value indicative of true or false. In this way, it is enabled that the first computing device checks whether the second data comprises the first value without decrypting the second data.

In some embodiments, the step of searching, by the first computing device and within the received first data, the encrypted first value is performed upon successfully verifying, by the first computing device, a digital proof of the identification credential and/or a digital proof of the presentation.

The first computing device may be configured to verify the value of the digital signature (e.g., the digital signature of the digital proof of the presentation and/or the digital signature of the digital proof of the identification credential) by processing the digital signature with an algorithm of verification and by applying a hash function to determined data of the presentation. If the result of processing the value of the digital signature with the algorithm of verification is equal to the result of applying the hash function to the determined data of the presentation, then a result indicative of verification is obtained (i.e., successful verification). If the result of processing the value of the digital signature with the algorithm of verification is not equal to the result of applying the hash function to the determined data of the presentation, then a result indicative of no verification is obtained (i.e., unsuccessful verification).

The step of determining whether a decryption resulting from combining the first partially decrypted result and the second partially decrypted result results in a value indicative of any one of true and false allows detecting cases in which the second computing device receives data from the first computing device which should not be decrypted by the first computing device.

For example, if the first computing device sends to the second computing device the encrypted value of the second data and a partial decryption (by using the second private key and the context) of the encrypted value of the second data instead of respectively the encrypted result of the search and the partial decryption (by using the second private key and the context) of the encrypted result of the search, the second computing device determines that a decryption resulting from combining the partial decryption (by using the second private key and the context) of the encrypted value of the second data and the partial decryption (by using the first private key and the context) of the encrypted value of the second data does not result in a value indicative of any one of true and false. Thereby if the first computing device sends to the second device the encrypted value of the second data and the partial decryption of the encrypted value of the second data, the second computing device does not send a second partially decrypted result to the first device, so that the first device cannot decrypt the encrypted value of the second data.

Otherwise, if the first computing device sends to the second computing device the encrypted result of the search and the partial decryption (by using the second private key and the context) of the encrypted result of the search, the second computing device decrypts the encrypted result of the search by using the first partially decrypted result and the second partially decrypted result thereby obtaining a value indicative of any one of true and false. The value indicative of true is indicative of that the first value is within the second data. The value indicative of false is indicative of that the first value is not within the second data.

A second aspect of the disclosure relates to a computer-implemented method, the method comprising:
- obtaining a context of homomorphic encryption and a public key;
- homomorphically encrypting third data with the public key and the context thereby obtaining an encrypted value of the third data; the third data being associated with a subject and/or with a credential holder;
- generating an identification credential comprising the encrypted value of the third data, the identification credential being for identifying the subject and/or the credential holder, and the encrypted value of the third data being a value of an attribute of the identification credential;
- sending the identification credential to the credential holder.

Thereby, the second aspect refers to a method allowing generating an identification credential suitable for being used in the first aspect of the disclosure.

In some embodiments:
- the credential holder is the second computing device;
- the public key received by the first computing device is the public key obtained in the step of obtaining a public key;
- the context of homomorphic encryption received by the first computing device is the context of homomorphic encryption obtained in the step of obtaining a context of homomorphic encryption;
- the first data comprises a proof of identity of the subject or of the credential holder, the proof of identity being verifiable by the first computing device;
- the second data is the third data; and
- the generated identification credential is the identification credential comprised by the first data.

A third aspect of the disclosure relates to a computing system configured to perform the method of the first aspect of the disclosure.

A fourth aspect of the disclosure relates to a computing device configured to perform the method of the second aspect of the disclosure.

A fifth aspect of the disclosure relates to a computer program product comprising instructions which, when the program is executed by a computing system, cause the computing system to carry out the steps of the method of the first aspect of the disclosure and/or the second aspect of the disclosure.

### BRIEF DESCRIPTION OF THE DRAWINGS

To complete the description and to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figures 1A and 1B show a method in accordance with embodiments.
Figure 2 shows a portion of a credential.
Figure 3 shows a computing device in accordance with embodiments.

### DETAILED DESCRIPTION

The following description is not to be taken in a limiting sense but is given solely for the purpose of describing the broad principles of the invention. Embodiments of the invention will be described by way of example, with reference to the above-mentioned drawings.

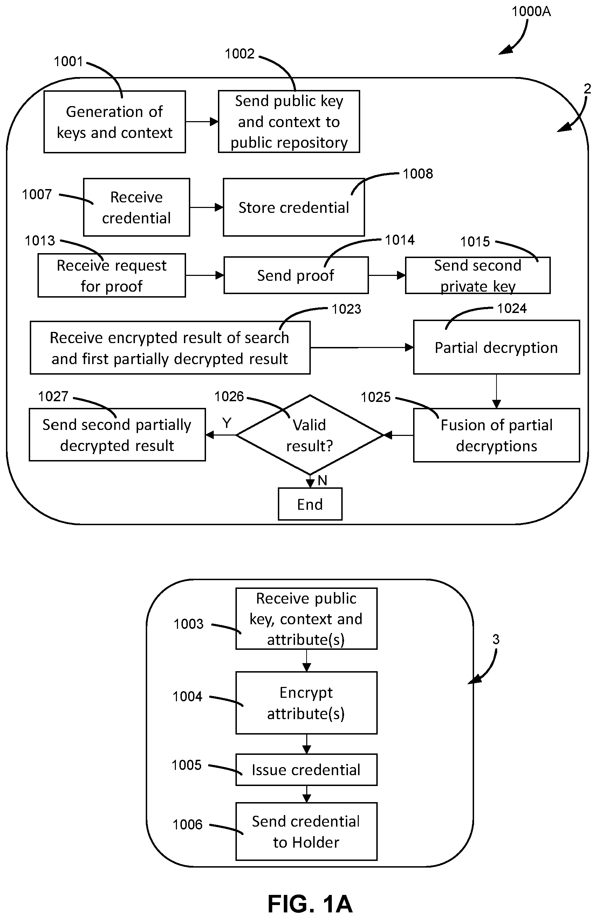

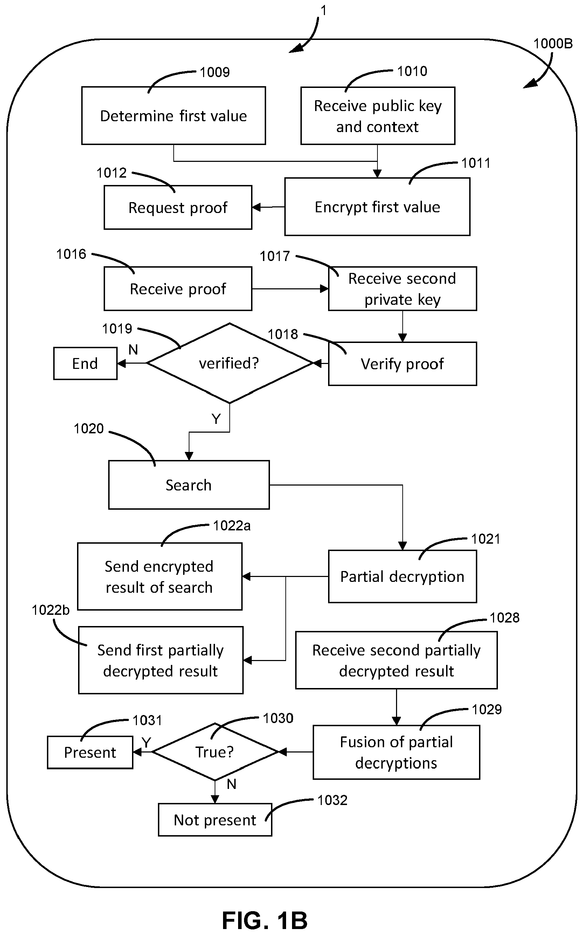

Figure 1A discloses a portion 1000A of a method 1000 in accordance with embodiments. Figure 1B discloses another portion 1000B of the method 1000 in accordance with embodiments. Different portions of the method 1000 are in different pages so that the drawings meet formal requirements. The method 1000 is performed by a first computing device (verifier 1, e.g., SSI verifier), a second computing device (holder 2) and a third computing device (issuer 3).

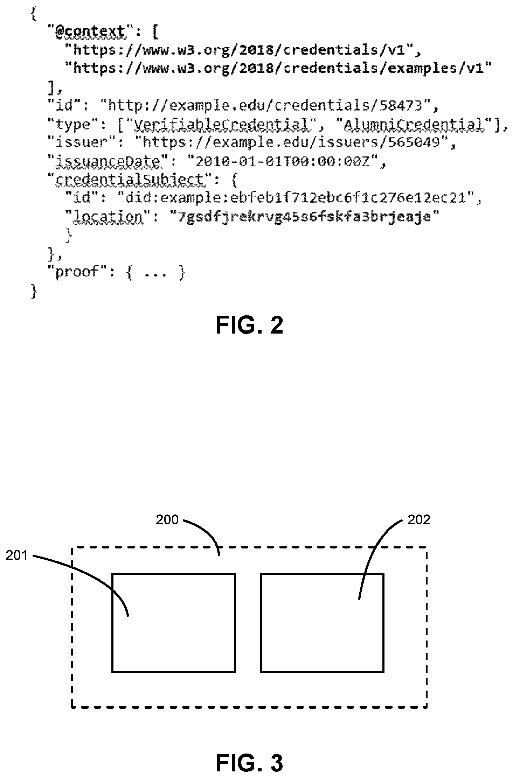

Figure 3 shows an example of a computing device 200 comprising means for processing data 201 and means for storing data 202. The computing device may be, for example, a CPU, a GPU, an FPGA, an ASIC, a personal computer or a laptop. The method 1000 may be performed with three computing devices 200, a first computing device of the three computing devices is the verifier 1, a second computing device of the three computing devices is the holder 2 and a third computing device of the three computing devices is the issuer 3.

The verifier 1 is communicatively coupled with the holder 2 by first communication means. The holder 2 is communicatively coupled with the issuer 3 by second communication means. The first communication means and the second communications means may be wireless. Therefore, data sent from one of the verifier 1, the holder 2 and the issuer 3, received by another one of the verifier 1, the holder 2 and the issuer 3 and mentioned in the description below may be wirelessly sent and received.

The portion 1000A of the method 1000 comprises a step of generating 1001 a first private key, a second private key, a public key and a context (e.g., a context of homomorphic encryption). The first private key, the second private key and the public key are generated according to a scheme of threshold cryptography. In the method 1000, the generating step 1001 is performed by a holder 2. The first private key and the second private key are for decrypting data encrypted with the public key and the context of homomorphic encryption.

In other embodiments, the generating step 1001 is performed by a computing device other than the verifier 1, the holder 2 and the issuer 3; and the first private key, the second private key, the public key and the context are received by the holder 2.

The first private key and the second private key are stored in the holder 2. The public key and the context of homomorphic encryption may be stored in the holder 2.

The portion 1000A of the method 1000 comprises, after the step of generating 1001, a step of sending 1002, by the holder 2, the public key and the context to a public repository of software, the public key and the context being stored in the public repository.

The portion 1000A of the method 1000 comprises, after the step of sending 1002, a step of receiving 1003, by the issuer 3, the public key, the context and one or more attributes. The public key and the context are received, for example, from the holder 2 and/or from the public repository. The value of each attribute of the one or more attributes is received, for example, from a subject (e.g., from a computing device owned by the subject); wherein the attributes are associated with the subject. The value of each attribute of the one or more attributes is data associated with the subject (e.g., data indicative of an address of the subject or data indicative of a phone number of the subject). In an example, the following attribute value, which is indicative of an address, is received by the issuer 3:
C/Alameda Urquijo, E, Bilbao, Spain

The portion 1000A of the method 1000 comprises, after the step of receiving 1003, encrypting 1004 a value of the received attribute by performing homomorphic encryption by using the public key and the context. The result of the encryption of the attribute value "C/Alameda Urquijo, E, Bilbao, Spain" is, for example (only for illustrative purposes of disclosing an encrypted value and, in particular, not being an encrypted value obtained by performing the homomorphic encryption of the method 1000):
7gsdfjrekrvg45s6fskfa3brjeaje

The portion 1000A of the method 1000 comprises, after the step of encrypting 1004, issuing 1005 a credential (e.g., a credential of self-sovereign identity (SSI)). The credential comprises the result of the encryption "7gsdfjrekrvg45s6fskfa3brjeaje". As shown in figure 2, the credential may further comprise, for example: a credential context, data indicative of an identification of the credential, data indicative of a type of the credential, data indicative of an issuance date of the credential, data indicative of the issuer of the credential, additional attributes (values of the additional attributes are preferably encrypted by performing homomorphic encryption using the public key and the context) and a digital proof (e.g., a digital signature).

The portion 1000A of the method 1000 comprises, after the step of issuing 1005, sending 1006 the issued credential to the holder 2.

The portion 1000A of the method 1000 comprises, after the step of sending 1006, receiving 1007 the credential by the holder 2.

The portion 1000A of the method 1000 comprises, after the step of receiving 1007, a step wherein the holder 2 stores 1008 the credential in the holder (e.g., in a wallet of self-sovereign identity). Since the holder 2 has stored therein the credential, the first private key and the second private key, the holder 2 can decrypt the encrypted value of the attribute (contained in the credential) by using the first private key, the second private key and the context.

The portion 1000B of the method 1000 comprises the following steps performed after the step of storing 1008:
- determining 1009, by the verifier 1, a first value; and
- receiving 1010, by the verifier 1, the public key and the context.

Following with the example of figure 2, since the aim of the verifier 1 is checking whether a non-encrypted value of an attribute of the credential comprises a name of a particular country, the first value is a name of country, e.g., Spain, Portugal or France.

The portion 1000B of the method 1000 comprises, after the step of determining 1009 and receiving 1010, a step wherein the verifier 1 encrypts 1011 the first value by using the public key and the context.

The portion 1000B of the method 1000 comprises, after the step of encrypting 1011 the first value, a step wherein the verifier 1 sends 1012 a proof request to the holder 2. The proof request comprises a request for a particular attribute having a property of the same type as the first value. Following with the example of figure 2, the particular attribute is location.

The portion 1000A of the method 1000 comprises, upon receiving 1013 the proof request by the holder 2, a step wherein the holder 2 sends 1014, to the verifier 1, a presentation comprising the credential, wherein the credential comprises the particular attribute requested in the proof request (following with the Example of figure 2, the location attribute). In addition, the holder 2 sends 1015 the second private key to the verifier 1. The presentation comprises the credential stored in the wallet of self-sovereign identity in addition to a proof of the presentation. The proof of the presentation is, for example, a digital signature of the presentation.

The portion 1000B of the method 1000 comprises a step wherein the verifier 1 receives 1016 the presentation sent by the holder 2.

Upon receiving 1016 the presentation and receiving 1017 the second private key, the verifier 1 verifies 1018 the proof of the presentation and/or the proof of the credential. In some examples, the proof of the presentation and/or the proof of the credential are verified by methods known in the art, for example, by:
- checking that the proof is available in a form of a proof suite stored in the verifier 1, thereby identifying a particular proof suite;
- checking that all required properties of the identified proof suite are present; and
- checking whether a result of applying an algorithm of verification of the identified proof suite to particular data of the presentation is indicative of verification or indicative of no verification.

In step 1019 of the method 1000 the following is performed:
- if the proof is successfully verified (i.e., a result indicative of verification is obtained in step 1018) then step 1020 of the method 1000 is performed;
- if the proof is not successfully verified (i.e., a result indicative of no verification is obtained in step 1018) then the method 1000 ends.

In an example in which the proof comprises a value of a digital signature, verification 1018 of the digital signature may comprise processing the value of the digital signature with the algorithm of verification and applying a hash function to determined data of the presentation. If the result of processing the value of the digital signature with the algorithm of verification is equal to the result of applying the hash function to the determined data of the presentation, then a result indicative of verification is obtained. If the result of processing the value of the digital signature with the algorithm of verification is not equal to the result of applying the hash function to the determined data of the presentation, then a result indicative of no verification is obtained.

In step 1020 a search of the encrypted first value within the presentation is performed. The homomorphic encryption of the first value and the homomorphic encryption of the value of the attribute location (which is included in the presentation) enables that the search of step 1020 be started by using the encrypted values (i.e., it does not require that the search be performed with the first value and the non-encrypted value of the location attribute, hence dispensing with the need to decrypt the encrypted first value and the encrypted value of the location attribute for performing the search 1020). The search results in an encrypted result of the search. Since the property of the particular attribute is of the same type as the first value, it is expected that if the credential comprises the first value, the first value is comprised by the unencrypted value of the particular attribute.

The search may be performed by methods know in the art, for example, by performing the following steps: $D = C 1 - C 2$ *F = Application of Fermat's Little theorem over D*
*R = Product of all elements within F*
wherein:
C1 is the encrypted first value in ASCII format,
C2 is the data of the presentation in ASCII format, and
R is the encrypted result of the search.

Instead of ASCII format, the skilled in the art knows that another format could be used.

The skilled in the art knows that the Fermat's Little theorem can be replaced with other calculations known in the art which allow performing the search.

Thereby, the encrypted result of the search is obtained without decrypting the encrypted first value and without decrypting data of the presentation.

The portion 1000B of the method 1000 comprises, after obtaining the encrypted result of the search 1020, a step wherein the verifier 1 partially decrypts 1021 the encrypted result of the search by using the second private key and the context, thereby obtaining a first partially decrypted result.

The portion 1000B of the method 1000 comprises, after obtaining a first partially decrypted result in step 1021, the following steps:
- sending 1022a, by the verifier 1 to the holder 2, the encrypted result of the search; and
- sending 1022b, by the verifier 1 to the holder 2, the first partially decrypted result.

The portion 1000A of the method 1000 comprises receiving 1023, by the holder 2, the encrypted result of the search and the first partially decrypted result.

The portion 1000A of the method 1000 comprises, after receiving 1023 the encrypted result of the search, a step wherein the holder partially decrypts 1024 the encrypted result of the search by using the first private key and the context thereby obtaining a second partially decrypted result.

The portion 1000A of the method 1000 comprises, after obtaining the second partially decrypted result and receiving 1023 the first partially decrypted result, a step wherein the holder 2 combines the first partially decrypted result and the second partially decrypted result to determine whether to send the first partially decrypted result to the verifier 1. The combination may be a fusion of the first partially decrypted result with the second partially decrypted result.

The portion 1000B of the method 1000 comprises, after performing step 1025, determining 1026 whether the combination resulting from step 1025:
- is indicative of true (i.e., indicative of that the first value is within the second data),
   or
- is indicative of false (i.e., indicative of that the first value is not within the second data).

To perform the determination of step 1026, the holder 2 may compare the value resulting from the combination with determined data indicative of any one of true and false.

If the value resulting from the combination matches a determined data indicative of any one of true and false, then the method 1000 proceeds to step 1027.

If the value resulting from the combination does not match any of the determined data indicative of any one of true and false, then the method 1000 ends.

The validation performed in step 1026 enables that the holder 2 detects cases in which the verifier 1 tries to decrypt data of the presentation. For example, if the verifier 1 sends, to the holder 2 , the encrypted value of the attribute having the property location (i.e., 7gsdfjrekrvg45s6fskfa3brjeaje) instead of sending the encrypted result of the search to the holder 2, the combination of the result of partially decrypting 7gsdfjrekrvg45s6fskfa3brjeaje and the first partially decrypted result does not match any determined data indicative of any one of true and false, and hence the result of partially decrypting 7gsdfjrekrvg45s6fskfa3brjeaje is not sent to the verifier 1.

In step 1027 of the portion 1000A of the method 1000, the holder 2 sends the second partially decrypted result to the verifier 1.

In step 1028 of the portion 1000B of the method 1000, the verifier 1 receives 1029 the second partially decrypted result and subsequently performs a fusion 1029 of the first partially decrypted result and the second partially decrypted result. The result of the fusion is either true or false.

In step 1030 of the portion 1000B of the method 1000, the verifier 1 determines whether the result of the fusion is true or false.

If the result of the fusion is true, it is determined that the first value is 1031 within a non-encrypted value of an attribute of the presentation (e.g., is within the non-encrypted value of the attribute having the property location). If the result of the fusion is false, it is determined that the first value is not 1032 within the non-encrypted value of the attribute having the property location (e.g., not any attribute of the presentation comprises a non-encrypted value comprising the first value).

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A computer-implemented method, the method comprising:
- determining (1009) a first value;
- receiving (1016), by a first computing device (1) being a self-sovereign identity, SSI, verifier, first data, the first data comprising an encrypted value of second data, wherein the encrypted value has resulted from homomorphically encrypting, by a computing device other than the first computing device, with a public key and a context of homomorphic encryption the second data;
- receiving (1010), by the first computing device, the public key and the context of homomorphic encryption;
- homomorphically encrypting (1011), by the first computing device (1), the first value by using the received public key and the received context of homomorphic encryption thereby obtaining an encrypted first value;
- searching (1020), by the first computing device (1) and within the received first data, the encrypted first value thereby obtaining an encrypted result of the search;
- sending (1022a), by the first computing device (1) and to a second computing device (2) being a credential holder, the encrypted result of the search found in the step of searching;
- receiving (1017), by the first computing device (1), a second private key;
- partially decrypting (1021), by the first computing device (1), the encrypted result of the search by using the second private key and the context thereby obtaining a first partially decrypted result;
- receiving (1023), by the second computing device (2), the first partially decrypted result;
- partially decrypting (1024), by the second computing device, the received encrypted result of the search by using a first private key and the context thereby obtaining a second partially decrypted result;
- determining (1026), by the second computing device (2), based on the first partially decrypted result and the second partially decrypted result whether a decryption resulting from combining the first partially decrypted result and the second partially decrypted result results in a value indicative of any one of true and false;
- upon determining that the decryption resulting from combining the first partially decrypted result and the second partially decrypted result results in a value indicative of any one of true and false, sending (1027), by the second computing device (2), the second partially decrypted result to the first computing device; and
- decrypting (1029), by the first computing device (1), the encrypted result of the search by using the first partially decrypted result and the second partially decrypted result, wherein the result of the decryption is a value indicative of true if the first value is within the second data, and the result of the decryption is a value indicative of false if the first value is not within the second data.

2. The method of claim 1, wherein the first data comprises the encrypted value of the second data and additional data.

3. The method of any one of the previous claims, wherein the second data comprises the first value and additional data.

4. The method of any one of the previous claims, wherein the step of decrypting (1029), by the first computing device (1), the encrypted result of the search by using the first partially decrypted result and the second partially decrypted result does not comprise decrypting the encrypted value of second data.

5. The method of any one of the previous claims, wherein the first data comprises an identification credential for identifying a subject and/or the second computing device (2).

6. The method of claim 5, wherein the encrypted value of the second data is a complete value of an attribute of the identification credential.

7. The method of any one of claims 5-6, wherein the identification credential comprises credential metadata, one or more claims and the digital proof of the identification credential; wherein each claim of the one or more claims is an assertion about the subject and/or about the second computing device (2); each claim of the one or more claims comprises one or more attributes, and each attribute of the one or more attributes comprises a property and a value; wherein the digital proof preferably comprises a value of a digital signature.

8. The method of any one of claims 5-7, wherein the first data is a presentation comprising presentation metadata, the identification credential and a digital proof of the presentation; wherein the digital proof of the presentation preferably comprises a value of a digital signature.

9. The method of any one of claims 5-8, wherein the step of searching, by the first computing device (1) and within the received first data, the encrypted first value is performed upon successfully verifying, by the first computing device (1), a digital proof of the identification credential and/or a digital proof of the presentation.

10. The method of any one of claims 5-9, wherein the homomorphic encryption context, the public key, the first private key and the second private key are generated by the second computing device (2) and/or provided by the subject.

11. A computer-implemented method for an issuer third computing device (3), the method comprising:
- obtaining (1003) a context of homomorphic encryption and a public key;
- homomorphically encrypting (1004) third data by using the public key and the context thereby obtaining an encrypted value of the third data; the third data being associated with a subject and/or with a second computing device (2) being a credential holder as defined in claim 1;
- generating (1005) an identification credential comprising the encrypted value of the third data, the identification credential being for identifying the subject and/or the credential holder, and the encrypted value of the third data being a value of an attribute of the identification credential;
- sending (1006) the identification credential to the credential holder.

12. The method of claim 11 and of any one of claims 5-10, wherein:
- the public key received by the first computing device is the public key obtained in the step of obtaining a public key;
- the context of homomorphic encryption received by the first computing device is the context of homomorphic encryption obtained in the step of obtaining a context of homomorphic encryption;
- the first data comprises a proof of identity of the subject or of the credential holder, the proof of identity being verifiable by the first computing device;
- the second data is the third data; and
- the generated identification credential is the identification credential comprised by the first data.

13. A computing system configured to perform the method of any one of claims 1 to 10.

14. A computing device configured to perform the method of claim 11.

15. A computer program product comprising instructions which, when the program is executed by a computing system, cause the computing system to carry out the steps of the method of any one of claims 1-12.

## Patentansprüche

1. Computer-implementiertes Verfahren, wobei das Verfahren umfasst:
Bestimmen (1009) eines ersten Wertes;
Empfangen (1016) von ersten Daten durch eine erste Rechenvorrichtung (1), die eine selbstsouveräne Identität, SSI, ist, wobei die ersten Daten einen verschlüsselten Wert von zweiten Daten umfassen, wobei der verschlüsselte Wert aus einer homomorphen Verschlüsselung der zweiten Daten durch eine andere Rechenvorrichtung als die erste Rechenvorrichtung mit einem öffentlichen Schlüssel und einem Kontext der homomorphen Verschlüsselung resultiert;
Empfangen (1010) des öffentlichen Schlüssels und des Kontextes der homomorphen Verschlüsselung durch das erste die erste Rechenvorrichtung;
homomorphes Verschlüsseln (1011) des ersten Wertes durch die erste Rechenvorrichtung (1) unter Verwendung des empfangenen öffentlichen Schlüssels und des empfangenen Kontextes der homomorphen Verschlüsselung, wodurch ein verschlüsselter erster Wert erhalten wird;
Durchsuchen (1020) des verschlüsselten ersten Wertes durch die erste Rechenvorrichtung (1) und innerhalb der empfangenen ersten Daten, wodurch ein verschlüsseltes Ergebnis der Suche erhalten wird;
Senden (1022a) des verschlüsselten Ergebnisses der im Suchschritt gefundenen Suche durch die erste Rechenvorrichtung (1) und an eine zweite Rechenvorrichtung (2), die ein Berechtigungsinhaber ist;
Empfangen (1017) eines zweiten privaten Schlüssels durch die erste Rechenvorrichtung (1);
teilweises Entschlüsseln (1021) des verschlüsselten Ergebnisses der Suche durch die erste Rechenvorrichtung (1) unter Verwendung des zweiten privaten Schlüssels und des Kontexts, wodurch ein erstes teilweise entschlüsseltes Ergebnis erhalten wird;
Empfangen (1023) des ersten teilweise entschlüsselten Ergebnisses durch die zweite Rechenvorrichtung (2);
teilweises Entschlüsseln (1024) des empfangenen verschlüsselten Ergebnisses der Suche durch die zweite Rechenvorrichtung unter Verwendung eines ersten privaten Schlüssels und des Kontexts, wodurch ein zweites teilweise entschlüsseltes Ergebnis erhalten wird;
Bestimmen (1026) durch die zweite Rechenvorrichtung (2) auf der Grundlage des ersten teilweise entschlüsselten Ergebnisses und des zweiten teilweise entschlüsselten Ergebnisses, ob eine Entschlüsselung, die aus der Kombination des ersten teilweise entschlüsselten Ergebnisses und des zweiten teilweise entschlüsselten Ergebnisses resultiert, zu einem Wert führt, der entweder wahr oder falsch anzeigt;
nach der Feststellung, dass die Entschlüsselung, die aus der Kombination des ersten teilweise entschlüsselten Ergebnisses und des zweiten teilweise entschlüsselten Ergebnisses resultiert, einen Wert ergibt, der entweder wahr oder falsch anzeigt, Senden (1027) des zweiten teilweise entschlüsselten Ergebnisses durch die zweite Rechenvorrichtung (2) an die erste Rechenvorrichtung; und
Entschlüsseln (1029) des verschlüsselten Ergebnisses der Suche durch die erste Rechenvorrichtung (1) unter Verwendung des ersten teilweise entschlüsselten Ergebnisses und des zweiten teilweise entschlüsselten Ergebnisses, wobei das Ergebnis der Entschlüsselung ein Wert ist, der wahr anzeigt, wenn der erste Wert innerhalb der zweiten Daten ist, und das Ergebnis der Entschlüsselung ein Wert ist, der falsch anzeigt, wenn der erste Wert nicht innerhalb der zweiten Daten ist.

2. Verfahren nach Anspruch 1, wobei die ersten Daten den verschlüsselten Wert der zweiten Daten und zusätzliche Daten umfassen.

3. Verfahren nach einem der vorhergehenden Ansprüche, wobei die zweiten Daten den ersten Wert und zusätzliche Daten umfassen.

4. Verfahren nach einem der vorhergehenden Ansprüche, wobei der Schritt des Entschlüsselns (1029) des verschlüsselten Ergebnisses der Suche durch die erste Rechenvorrichtung (1) unter Verwendung des ersten teilweise entschlüsselten Ergebnisses und des zweiten teilweise entschlüsselten Ergebnisses nicht das Entschlüsseln des verschlüsselten Wertes der zweiten Daten umfasst.

5. Verfahren nach einem der vorhergehenden Ansprüche, wobei die ersten Daten einen Identifikationsnachweis zur Identifizierung eines Subjekts und/oder der zweiten Rechenvorrichtung (2) umfassen.

6. Verfahren nach Anspruch 5, wobei der verschlüsselte Wert der zweiten Daten ein vollständiger Wert eines Attributs des Identifikationsnachweises ist.

7. Verfahren nach einem der Ansprüche 5-6, wobei der Identifikationsnachweis Nachweis-Metadaten, einen oder mehrere Ansprüche und den digitalen Nachweis des Identifikationsnachweises umfasst; wobei jeder Anspruch des einen oder der mehreren Ansprüche eine Behauptung über das Subjekt und/oder über die zweite Rechenvorrichtung (2) ist; jeder Anspruch des einen oder der mehreren Ansprüche ein oder mehrere Attribute umfasst und jedes Attribut des einen oder der mehreren Attribute eine Eigenschaft und einen Wert umfasst; wobei der digitale Nachweis vorzugsweise einen Wert einer digitalen Signatur umfasst.

8. Verfahren nach einem der Ansprüche 5-7, wobei es sich bei den ersten Daten um eine Präsentation handelt, die Präsentations-Metadaten, den Identifikationsnachweis und einen digitalen Nachweis der Präsentation umfasst; wobei der digitale Nachweis der Präsentation vorzugsweise einen Wert einer digitalen Signatur umfasst.

9. Verfahren nach einem der Ansprüche 5 bis 8, wobei der Schritt des Suchens des verschlüsselten ersten Wertes durch die erste Rechenvorrichtung (1) und innerhalb der empfangenen ersten Daten nach erfolgreicher Verifizierung eines digitalen Nachweises des Identifikationsnachweises und/oder eines digitalen Nachweises der Präsentation durch die erste Rechenvorrichtung (1) durchgeführt wird.

10. Verfahren nach einem der Ansprüche 5-9, wobei der homomorphe Verschlüsselungskontext, der öffentliche Schlüssel, der erste private Schlüssel und der zweite private Schlüssel von der zweiten Rechenvorrichtung (2) erzeugt und/oder von dem Subjekt bereitgestellt werden.

11. Computerimplementiertes Verfahren für eine dritte Rechenvorrichtung (3) eines Ausstellers, wobei das Verfahren umfasst:
Erhalten (1003) eines Kontextes der homomorphen Verschlüsselung und eines öffentlichen Schlüssels;
homomorphes Verschlüsseln (1004) dritter Daten unter Verwendung des öffentlichen Schlüssels und des Kontexts, wodurch ein verschlüsselter Wert der dritten Daten erhalten wird; wobei die dritten Daten mit einem Subjekt und/oder mit einer zweiten Rechenvorrichtung (2) assoziiert sind, die ein Berechtigungsinhaber gemäß Anspruch 1 ist;
Erzeugen (1005) eines Identifikationsnachweises, der den verschlüsselten Wert der dritten Daten enthält, wobei der Identifikationsnachweis zum Identifizieren des Subjekts und/oder des Berechtigungsinhabers dient und der verschlüsselte Wert der dritten Daten ein Wert eines Attributs des Identifikationsnachweises ist;
Senden (1006) des Identifikationsnachweises an den Berechtigungsinhaber.

12. Verfahren nach Anspruch 11 und nach einem der Ansprüche 5-10, wobei:
der von der ersten Rechenvorrichtung empfangene öffentliche Schlüssel der öffentliche Schlüssel ist, der in dem Schritt des Erhaltens eines öffentlichen Schlüssels erhalten wurde;
der Kontext der homomorphen Verschlüsselung, der von der ersten Rechenvorrichtung empfangen wird, der Kontext der homomorphen Verschlüsselung ist, der in dem Schritt des Erhaltens eines Kontexts der homomorphen Verschlüsselung erhalten wurde;
die ersten Daten einen Identitätsnachweis des Subjekts oder des Berechtigungsinhabers umfassen, wobei der Identitätsnachweis durch die erste Rechenvorrichtung überprüfbar ist;
die zweiten Daten die dritten Daten sind; und
der erzeugte Identifikationsnachweis der Identifikationsnachweis ist, der aus den ersten Daten besteht.

13. Computersystem, das eingerichtet ist, das Verfahren nach einem der Ansprüche 1 bis 10 durchzuführen.

14. Rechenvorrichtung, die eingerichtet ist, das Verfahren nach Anspruch 11 durchzuführen.

15. Computerprogrammprodukt, das Anweisungen enthält, die, wenn das Programm von einem Computersystem ausgeführt wird, das Computersystem veranlassen, die Schritte des Verfahrens nach einem der Ansprüche 1 bis 12 auszuführen.

## Revendications

1. Méthode mise en œuvre par ordinateur, la méthode comprenant :
- la détermination (1009) d'une première valeur ;
- la réception (1016), par un premier dispositif informatique (1) qui est un vérificateur d'identité auto-souveraine, SSI, de premières données, les premières données comprenant une valeur chiffrée de deuxièmes données, dans laquelle la valeur chiffrée résulte d'un chiffrement homomorphe des deuxièmes données par un dispositif informatique autre que le premier dispositif informatique à l'aide d'une clé publique et d'un contexte de chiffrement homomorphe ;
- la réception (1010), par le premier dispositif informatique, de la clé publique et du contexte de chiffrement homomorphe ;
- le chiffrement homomorphe (1011), par le premier dispositif informatique (1), de la première valeur en utilisant la clé publique reçue et le contexte de chiffrement homomorphe reçu, obtenant ainsi une première valeur chiffrée ;
- la recherche (1020), par le premier dispositif informatique (1) et dans les premières données reçues, de la première valeur chiffrée, obtenant ainsi un résultat chiffré de la recherche ;
- l'envoi (1022a), par le premier dispositif informatique (1) et à un deuxième dispositif informatique (2) qui est un détenteur de justificatifs, du résultat chiffré de la recherche trouvé à l'étape de recherche ;
- la réception (1017), par le premier dispositif informatique (1), d'une deuxième clé privée ;
- le déchiffrement partiel (1021), par le premier dispositif informatique (1), du résultat chiffré de la recherche en utilisant la deuxième clé privée et le contexte, obtenant ainsi un premier résultat partiellement déchiffré ;
- la réception (1023), par le deuxième dispositif informatique (2), du premier résultat partiellement déchiffré ;
- le déchiffrement partiel (1024), par le deuxième dispositif informatique, du résultat chiffré reçu de la recherche en utilisant une première clé privée et le contexte, obtenant ainsi un deuxième résultat partiellement déchiffré ;
- sur la base du premier résultat partiellement déchiffré et du deuxième résultat partiellement déchiffré, la détermination (1026) par le deuxième dispositif informatique (2) précisant si un déchiffrement résultant de la combinaison du premier résultat partiellement déchiffré et du deuxième résultat partiellement déchiffré aboutit à une valeur indiquant l'un quelconque parmi « vrai » et « faux » ;
- lorsqu'il est déterminé que le déchiffrement résultant de la combinaison du premier résultat partiellement déchiffré et du deuxième résultat partiellement déchiffré aboutit à une valeur indiquant l'un quelconque parmi « vrai » et « faux », l'envoi (1027) par le deuxième dispositif informatique (2) du deuxième résultat partiellement déchiffré au premier dispositif informatique ; et
- le déchiffrement (1029), par le premier dispositif informatique (1), du résultat chiffré de la recherche en utilisant le premier résultat partiellement déchiffré et le deuxième résultat partiellement déchiffré, dans laquelle
le résultat du déchiffrement est une valeur indiquant « vrai » si la première valeur se trouve dans les deuxièmes données, et le résultat du déchiffrement est une valeur indiquant « faux » si la première valeur ne se trouve pas dans les deuxièmes données.

2. Méthode selon la revendication 1, dans laquelle les premières données comprennent la valeur chiffrée des deuxièmes données et de données supplémentaires.

3. Méthode selon l'une quelconque des revendications précédentes, dans laquelle les deuxièmes données comprennent la première valeur et des données supplémentaires.

4. Méthode selon l'une quelconque des revendications précédentes, dans laquelle l'étape de déchiffrement (1029), par le premier dispositif informatique (1), du résultat chiffré de la recherche en utilisant le premier résultat partiellement déchiffré et le deuxième résultat partiellement déchiffré ne comprend pas le déchiffrement de la valeur chiffrée de deuxièmes données.

5. Méthode selon l'une quelconque des revendications précédentes, dans laquelle les premières données comprennent un justificatif d'identification destiné à identifier un sujet et/ou le deuxième dispositif informatique (2).

6. Méthode selon la revendication 5, dans laquelle la valeur chiffrée des deuxièmes données est une valeur complète d'un attribut du justificatif d'identification.

7. Méthode selon l'une quelconque des revendications 5 à 6, dans laquelle le justificatif d'identification comprend des métadonnées de justificatif, une ou plusieurs revendications et la preuve numérique du justificatif d'identification ; dans laquelle chaque revendication des une ou plusieurs revendications est une assertion concernant le sujet et/ou concernant le deuxième dispositif informatique (2) ; chaque revendication des une ou plusieurs revendications comprend un ou plusieurs attributs, et chaque attribut des un ou plusieurs attributs comprend une propriété et une valeur ; dans laquelle la preuve numérique comprend de préférence une valeur d'une signature numérique.

8. Méthode selon l'une quelconque des revendications 5 à 7, dans laquelle les premières données sont une présentation comprenant des métadonnées de présentation, le justificatif d'identification et une preuve numérique de la présentation ; dans laquelle la preuve numérique de la présentation comprend de préférence une valeur d'une signature numérique.

9. Méthode selon l'une quelconque des revendications 5 à 8, dans laquelle l'étape de recherche, par le premier dispositif informatique (1) et dans les premières données reçues, de la première valeur chiffrée est effectuée après vérification réussie, par le premier dispositif informatique (1), d'une preuve numérique du justificatif d'identification et/ou d'une preuve numérique de la présentation.

10. Méthode selon l'une quelconque des revendications 5 à 9, dans laquelle le contexte de chiffrement homomorphe, la clé publique, la première clé privée et la deuxième clé privée sont générés par le deuxième dispositif informatique (2) et/ou fournis par le sujet.

11. Méthode mise en œuvre par ordinateur destinée à un troisième dispositif informatique (3) d'émetteur, la méthode comprenant :
- l'obtention (1003) d'un contexte de chiffrement homomorphe et d'une clé publique ;
- le chiffrement homomorphe (1004) de troisièmes données en utilisant la clé publique et le contexte, obtenant ainsi une valeur chiffrée des troisièmes données ; les troisièmes données étant associées à un sujet et/ou à un deuxième dispositif informatique (2) qui est un détenteur de justificatifs tel que défini dans la revendication 1 ;
- la génération (1005) d'un justificatif d'identification comprenant la valeur chiffrée des troisièmes données, le justificatif d'identification étant destiné à identifier le sujet et/ou le détenteur de justificatifs, et la valeur chiffrée des troisièmes données étant une valeur d'un attribut du justificatif d'identification ;
- l'envoi (1006) du justificatif d'identification au détenteur de justificatifs.

12. Méthode selon la revendication 11 et selon l'une quelconque des revendications 5 à 10, dans laquelle :
- la clé publique reçue par le premier dispositif informatique est la clé publique obtenue à l'étape d'obtention d'une clé publique ;
- le contexte de chiffrement homomorphe reçu par le premier dispositif informatique est le contexte de chiffrement homomorphe obtenu à l'étape d'obtention d'un contexte de chiffrement homomorphe ;
- les premières données comprennent une preuve d'identité du sujet ou du détenteur de justificatifs, la preuve d'identité étant vérifiable par le premier dispositif informatique ;
- les deuxièmes données sont les troisièmes données ; et
- le justificatif d'identification généré est le justificatif d'identification contenu dans les premières données.

13. Système informatique configuré pour mettre en œuvre la méthode selon l'une quelconque des revendications 1 à 10.

14. Dispositif informatique configuré pour mettre en œuvre la méthode selon la revendication 11.

15. Produit de programme informatique comprenant des instructions qui, lorsque le programme est exécuté par un système informatique, amènent le système informatique à mettre en œuvre les étapes de la méthode selon l'une quelconque des revendications 1 à 12.
